# EUROPEAN PATENT SPECIFICATION

(11) **EP 3 280 090 B1**
(45) Date of publication and mention of the grant of the patent: **26.08.2020**
(21) Application number: 16771252.0
(22) Date of filing: 15.03.2016
(51) Int. Cl.: H04L 9/32, H04L 29/06, H04W 12/06

(54) **USER AUTHENTICATION METHOD AND DEVICE**
BENUTZERAUTHENTIFIZIERUNGSVERFAHREN UND -VORRICHTUNG
PROCÉDÉ ET DISPOSITIF D'AUTHENTIFICATION D'UTILISATEUR

(30) Priority: 02.04.2015 CN 201510155552
(43) Date of publication of application: 07.02.2018
(73) Proprietor: Alibaba Group Holding Limited, Grand Cayman (KY)
(72) Inventor: JIANG, Long, Hangzhou 310099 (CN)
(74) Representative: Conroy, John
(86) International application number: PCT/CN2016/076415
(87) International publication number: WO 2016/155497

(56) References cited:
- CN-A- 101 192 926
- CN-A- 103 716 794
- CN-A- 103 716 794
- CN-A- 104 065 653
- CN-A- 104 219 058
- US-A1- 2010 070 766
- US-A1- 2010 070 766
- DIEZ FIDEL PANIAGUA ET AL: "Toward self-authenticable wearable devices", TECHNICAL REPORT OF WIRELESS NETWORKING GROUP, COORDINATED SCIENCE LABORATORY; DEPT. ELECTRICAL AND COMPUTER ENGINEERING; UNIVERSITY OF ILLINOIS AT URBANA-CHAMPAIGN, US, vol. 22, no. 1, February 2015 (2015-02), pages 36-43, XP011574908, ISSN: 1536-1284, DOI: 10.1109/MWC.2015.7054717 [retrieved on 2015-03-04]

## Description

### TECHNICAL FIELD

The present application relates to the field of Internet technologies, and in particular, to a method and an apparatus for authenticating a user and a method and an apparatus for registering a wearable device.

### BACKGROUND ART

With rapid development of Internet technologies, users do all kinds of activities, such as handling official businesses, entertainment, shopping, and money management, by using networks increasingly. A user usually obtains these services from multiple service providers. The user registers with servers of the service providers, and needs to provide an account and a password each time the user obtains a service, so that the server authenticates the user and provides the corresponding service.

For the sake of security, the user should try to avoid using the same account and the same password at the multiple service providers. When the user wants to obtain increasingly more services, memorizing an account at each service provider and a corresponding password becomes a growing burden on the user. At the same time, as network services are increasingly popularized in all aspects of life, the user always needs to input accounts and passwords to accomplish authentication, which has complex operations and reduces the efficiency for acquiring the network services.

DIEZ PANIAGUA FIDEL ET AL, "Toward self-authenticable wearable devices", IEEE Wireless Communications, February 2015, defines an authentication protocol that enables secure mutual end-to-end authentication between a wearable device and any other entity.

### SUMMARY OF THE INVENTION

The invention is defined by claims 1, 11, 19 and 20.

In view of the above, the present application provides a method for authenticating a user, applied to a server, wherein the server stores a corresponding relationship between a user identification, a wearable device identification, and a server authentication key of the user, and the method includes:
receiving an authentication request sent by the user through a terminal, the authentication request carrying the user identification and/or the wearable device identification of the user;
acquiring downlink authentication information, and issuing to the terminal a detection instruction that carries the downlink authentication information and the wearable device identification of the user;
receiving a detection acknowledgment, returned by the terminal, which carries uplink authentication information, the uplink authentication information being generated, by a wearable device designated in the detection instruction, according to a device authentication key and the downlink authentication information, and the device authentication key being the same as or corresponding to the server authentication key; and
matching the downlink authentication information with the uplink authentication information by using the server authentication key of the user, wherein the user passes the authentication if the matching succeeds.

The present application provides a method for authenticating a user, applied to a terminal connected to a wearable device of the user, wherein the method includes:
sending an authentication request to a server according to an operation of the user, the authentication request carrying a user identification and/or a wearable device identification of the user;
receiving a detection instruction of the server, the detection instruction carrying downlink authentication information and the wearable device identification;
sending the downlink authentication information to a wearable device designated in the detection instruction, and receiving uplink authentication information returned by the wearable device; the uplink authentication information being generated by the wearable device according to a stored device authentication key and the downlink authentication information, and the device authentication key being the same as or corresponding to a server authentication key stored in the server;
sending to the server a detection acknowledgment that carries the uplink authentication information; and
receiving a user authentication result determined by the server according to the uplink authentication information, the downlink authentication information, and the server authentication key.

The present application provides a method for registering a wearable device, applied to a server, including:
receiving a wearable device registration request sent by a user through a terminal, the registration request carrying a user identification and a wearable device identification of the user;
acquiring a server authentication key of the user and a device authentication key, and issuing to the terminal a write instruction that carries the device authentication key and the wearable device identification of the user; and
receiving a write acknowledgment returned by the terminal, and if the write acknowledgment indicates that the device authentication key has been successfully stored in a wearable device designated in the write instruction, storing a corresponding relationship between the user identification, the wearable device identification, and the server authentication key of the user.

The present application provides a method for registering a wearable device, applied to a terminal, including:
sending a wearable device registration request to a server according to an operation of a user, the registration request carrying a user identification and a wearable device identification of the user;
receiving a write instruction of the server, the write instruction carrying a device authentication key and the wearable device identification of the user;
executing an operation of writing the device authentication key on a wearable device designated in the write instruction; and
sending a write acknowledgment to the server, the write acknowledgment carrying a message indicating whether the device authentication key is successfully written.

The present application further provides an apparatus for authenticating a user, applied to a server, wherein the server stores a corresponding relationship between a user identification, a wearable device identification, and a server authentication key of the user, and the apparatus includes:
an authentication request receiving unit configured to receive an authentication request sent by the user through a terminal, the authentication request carrying the user identification and/or the wearable device identification of the user;
a detection instruction issuing unit configured to acquire downlink authentication information, and issue to the terminal a detection instruction that carries the downlink authentication information and the wearable device identification of the user;
a detection acknowledgment receiving unit configured to receive a detection acknowledgment, returned by the terminal, which carries uplink authentication information, the uplink authentication information being generated, by a wearable device designated in the detection instruction, according to a device authentication key and the downlink authentication information, and the device authentication key being the same as or corresponding to the server authentication key; and
a matching unit configured to match the downlink authentication information with the uplink authentication information by using the server authentication key of the user, wherein the user passes the authentication if the matching succeeds.

The present application provides an apparatus for authenticating a user, applied to a terminal connected to a wearable device of the user, wherein the apparatus includes:
an authentication request sending unit configured to send an authentication request to a server according to an operation of the user, the authentication request carrying a user identification and/or a wearable device identification of the user;
a detection instruction receiving unit configured to receive a detection instruction of the server, the detection instruction carrying downlink authentication information and the wearable device identification;
an uplink authentication information unit configured to send the downlink authentication information to a wearable device designated in the detection instruction, and receive uplink authentication information returned by the wearable device; the uplink authentication information being generated by the wearable device according to a stored device authentication key and the downlink authentication information, and the device authentication key being the same as or corresponding to a server authentication key stored in the server;
a detection acknowledgment sending unit configured to send to the server a detection acknowledgment that carries the uplink authentication information; and
an authentication result receiving unit configured to receive a user authentication result determined by the server according to the uplink authentication information, the downlink authentication information, and the server authentication key.

The present application provides an apparatus for registering a wearable device, applied to a server, including:
a registration request receiving unit configured to receive a wearable device registration request sent by a user through a terminal, the registration request carrying a user identification and a wearable device identification of the user;
a write instruction issuing unit configured to acquire a server authentication key of the user and a device authentication key, and issue to the terminal a write instruction that carries the device authentication key and the wearable device identification of the user; and
a write acknowledgment receiving unit configured to receive a write acknowledgment returned by the terminal, and if the write acknowledgment indicates that the device authentication key has been successfully stored in a wearable device designated in the write instruction, store a corresponding relationship between the user identification, the wearable device identification, and the server authentication key of the user.

The present application provides an apparatus for registering a wearable device, applied to a terminal, including:
a registration request sending unit configured to send a wearable device registration request to a server according to an operation of a user, the registration request carrying a user identification and a wearable device identification of the user;
a write instruction receiving unit configured to receive a write instruction of the server, the write instruction carrying a device authentication key and the wearable device identification of the user;
a write operation execution unit configured to execute an operation of writing the device authentication key on a wearable device designated in the write instruction; and
a write acknowledgment sending unit configured to send a write acknowledgment to the server, the write acknowledgment carrying a message indicating whether the device authentication key is successfully written.

The present application provides a payment method, including:
receiving a payment request sent by a user through a payment client terminal, the payment request carrying a user identification and/or a wearable device identification of the user;
acquiring downlink authentication information, and issuing to the payment client terminal an authentication instruction that includes the downlink authentication information and the wearable device identification;
receiving authentication response information, returned by the payment client terminal, which carries uplink authentication information, the uplink authentication information being generated, by a wearable device designated in the authentication instruction, according to a device authentication key and the downlink authentication information, and the device authentication key being the same as or corresponding to a server authentication key; and
matching the downlink authentication information with the uplink authentication information by using the server authentication key of the user, wherein the user passes the authentication if the matching succeeds, and a payment operation is performed after the authentication is successful.

The present application provides a payment method, including:
sending a payment request to a server in response to a payment operation of a user on a payment client terminal, the payment request carrying a user identification and/or a wearable device identification of the user;
receiving an authentication instruction, issued by the server, which includes downlink authentication information and the wearable device identification, and sending the downlink authentication information to a wearable device, so that the wearable device generates uplink authentication information by using a device authentication key stored by the wearable device and the downlink authentication information; and
receiving the uplink authentication information returned by the wearable device, and sending the uplink authentication information to the server, so that the server authenticates the user according to the uplink authentication information and performs a payment operation after the authentication is successful.

The present application provides a payment method for a wearable device, including:
receiving payment authentication information sent by a payment client terminal, the payment authentication information including downlink authentication information issued by a server based on a payment request of a user sent by the payment client terminal; and
generating uplink authentication information based on a stored device authentication key and the downlink authentication information, and sending the uplink authentication information to the payment client terminal, so that the payment client terminal sends the uplink authentication information to the server, such that the server can authenticate the user based on the uplink authentication information and perform a payment operation after the authentication is successful.

The present application provides a payment apparatus, including:
a payment request receiving unit configured to receive a payment request sent by a user through a payment client terminal, the payment request carrying a user identification and/or a wearable device identification of the user;
an authentication instruction issuing unit configured to acquire downlink authentication information, and issue to the payment client terminal an authentication instruction that includes the downlink authentication information and the wearable device identification;
an authentication response receiving unit configured to receive authentication response information, returned by the payment client terminal, which carries uplink authentication information, the uplink authentication information being generated, by a wearable device designated in the authentication instruction, according to a device authentication key and the downlink authentication information, and the device authentication key being the same as or corresponding to a server authentication key; and
a payment matching unit configured to match the downlink authentication information with the uplink authentication information by using the server authentication key of the user, wherein the user passes the authentication if the matching succeeds, and a payment operation is performed after the authentication is successful.

The present application provides a payment apparatus, including:
a payment request sending unit configured to send a payment request to a server in response to a payment operation of a user on a payment client terminal, the payment request carrying a user identification and/or a wearable device identification of the user;
an authentication instruction receiving unit configured to receive an authentication instruction, issued by the server, which includes downlink authentication information and the wearable device identification, and send the downlink authentication information to a wearable device, so that the wearable device generates uplink authentication information by using a device authentication key stored by the wearable device and the downlink authentication information; and
an authentication response sending unit configured to receive the uplink authentication information returned by the wearable device, and send the uplink authentication information to the server, so that the server authenticates the user according to the uplink authentication information and performs a payment operation after the authentication is successful.

The present application further provides a payment apparatus for a wearable device, including:
a payment authentication information receiving unit configured to receive payment authentication information sent by a payment client terminal, the payment authentication information including downlink authentication information issued by a server based on a payment request of a user sent by the payment client terminal; and
an uplink authentication information generation unit configured to generate uplink authentication information based on a stored device authentication key and the downlink authentication information, and send the uplink authentication information to the payment client terminal, so that the payment client terminal sends the uplink authentication information to the server, such that the server can authenticate the user based on the uplink authentication information and perform a payment operation after the authentication is successful.

It can be seen from the above technical solutions that, according to embodiments of the present application, a server authentication key and a device authentication key are set on a server and a wearable device, and the server authenticates, through interaction with a terminal, a designated wearable device by using the set server authentication key and the set device authentication key, thereby accomplishing authentication on a user corresponding to the wearable device. The user neither needs to memorize any account and any password nor needs to input any account and any password during the authentication, which reduces the burden on the user and improves the efficiency of the user for acquiring a network service.

### BRIEF DESCRIPTION OF THE DRAWINGS

FIG. 1 shows a network structure diagram of an application scenario according to the present application;
FIG. 2 is a flowchart of a method for authenticating a user applied to a server according to an embodiment of the present application;
FIG. 3 is a flowchart of a method for authenticating a user applied to a terminal according to an embodiment of the present application;
FIG. 4 is a flowchart of a method for registering a wearable device applied to a server according to an embodiment of the present application;
FIG. 5 is a flowchart of a method for registering a wearable device applied to a terminal according to an embodiment of the present application;
FIG. 6 is a hardware structure diagram of a server, a wearable device or a terminal;
FIG. 7 is a logic structure diagram of an apparatus for authenticating a user applied to a server according to an embodiment of the present application;
FIG. 8 is a logic structure diagram of an apparatus for authenticating a user applied to a terminal according to an embodiment of the present application;
FIG. 9 is a logic structure diagram of an apparatus for registering a wearable device applied to a server according to an embodiment of the present application; and
FIG. 10 is a logic structure diagram of an apparatus for registering a wearable device applied to a terminal according to an embodiment of the present application.

### DETAILED DESCRIPTION

A wearable device is a portable device that can be worn by a user or integrated into a user's clothing or accessory, for example, wristbands, smart watches, smart shoes, smart clothes, smart glasses, smart helmets, smart rings, and so on. The wearable device has some computing functions, can be connected to a terminal such as a smart phone, a tablet computer, and a personal computer through a hardware interface or a wireless local area network, and implements a variety of functions by exchanging data with the terminal.

A wearable device is generally specific to one user. Some wearable devices may be worn on users whenever and wherever possible. To some extent, such a wearable device represents a user. An embodiment of the present application proposes a method for authenticating a user, which authenticates the user by utilizing storage and computing functions of a wearable device without requiring the user to memorize and frequently input an account and a password, thereby solving the problems existing in the prior art.

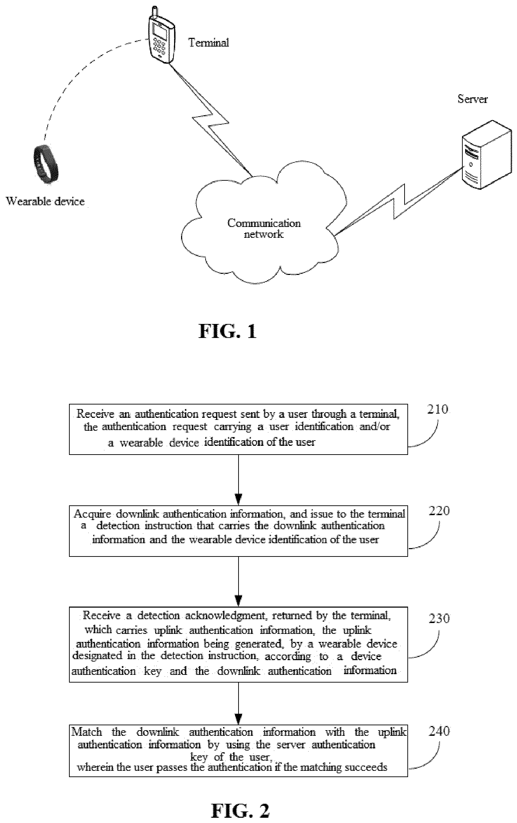

A network environment to which the embodiment of the present application is applied is as shown in FIG. 1. A wearable device is connected to a terminal through a hardware interface or a wireless local area network. The hardware interface may be an audio interface, a Universal Serial Bus (USB) interface, or the like. The wireless local area network may be Bluetooth, Wireless-Fidelity (Wi-Fi), ZigBee (ZigBee protocol), or the like. The terminal may be a smart phone, a tablet computer, a personal computer, or the like. The terminal communicates with a server through a communication network (such as the Internet and/or a mobile communication network). A user sends an access request to the server with the terminal, and the server authenticates the user. In the embodiment of the present application, no limitations are made to the type of the terminal, the hardware interface or a wireless local area network protocol through which the wearable device is connected to the terminal, the protocol and network structure of the communication network, and a specific implementation of the server.

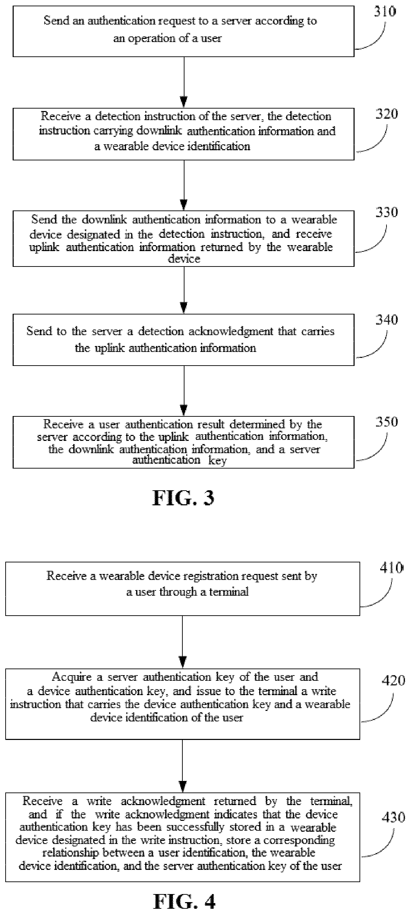

In an embodiment of the present application, a process of the method for authenticating a user on a server is as shown in FIG. 2, and a process thereof on a terminal is as shown in FIG. 3.

In this embodiment, the server stores a corresponding relationship between a user identification, a wearable device identification, and a server authentication key of a user. The user identification is a unique identity identification according to which a user is distinguished from other users for the server, for example, a user name, a registered mail, or the like. If the user is bound to a mobile terminal, the user identification may also be a number, an International Mobile Equipment identity (IMIE), or the like of the mobile terminal to which the user is bound. The wearable device identification is used to uniquely represent the wearable device, and varies with a different specific device type and a different wireless local area network protocol adopted. The wearable device identification may generally be a hardware address of the wearable device, for example, a Media Access Control (MAC) address. The server authentication key is stored on the server, and is the same as or corresponds to a device authentication key stored on the wearable device according to an encryption algorithm using the server authentication key. The wearable device identification and the server authentication key stored on the server are one-to-one corresponding to each other. If a user can have more than one wearable device for authentication, a user identification may correspond to two or more wearable device identifications and server authentication keys. It should be additionally noted that the corresponding relationship between the user identification, the wearable device identification, and the server authentication key may be stored in the server locally, and may also be stored in other storage devices accessible to the server, for example, a disk array for storing local area networks or a cloud storage network, which is not limited in this embodiment.

On the terminal, in step 310, an authentication request is sent to a server according to an operation of a user, the authentication request carrying a user identification and/or a wearable device identification of the user.

On the server, in step 210, an authentication request sent by a user through a terminal is received.

When the user requests, from a server, a service requiring identity authentication (e.g., login, access to a personal account, payment, or the like) on the terminal, the server requires, from the terminal, related information for authenticating the user. The terminal sends an authentication request to the server. The authentication request carries the user identification of the user, or the wearable device identification of the user, or the user identification and the wearable device identification of the user.

After the server receives the authentication request of the terminal, which user requesting authentication can be determined through the user identification and/or the wearable device identification in the authentication request.

On the server, in step 220, downlink authentication information is acquired, and a detection instruction that carries the downlink authentication information and the wearable device identification of the user is issued to the terminal.

The downlink authentication information may be a piece of authentication data, and may also be a ciphertext after the authentication data is encrypted by using the server authentication key stored on the server. The server may obtain the authentication data in any manner, for example, the server randomly generates the authentication data, or captures a certain number of bytes from a file or an image. The server may generate the authentication data locally by its own, and may also acquire the authentication data from another server. This embodiment makes no limitations thereto.

After receiving the authentication request of the terminal, the server extracts the user identification and/or the wearable device identification in the authentication request, finds, in the stored corresponding relationship between the user identification, the wearable device identification, and the server authentication key, whether the user identification and/or the wearable device identification are/is included. If the user identification and/or the wearable device identification are/is not included or the user identification and the wearable device identification in the authentication request do not belong to a same user, the server rejects the authentication request of the terminal. Otherwise, the server acquires authentication data. For downlink authentication information as a plaintext, the server encapsulates the authentication data and the wearable device identification of the user in a detection instruction, and issues the detection instruction to the terminal. For downlink authentication information as a ciphertext, the server encrypts the authentication data by using a server authentication key corresponding to the user identification or the wearable device identification in the authentication request to generate downlink authentication information, encapsulates the downlink authentication information and the wearable device identification of the user in a detection instruction, and issues the detection instruction to the terminal.

On the terminal, in step 320, a detection instruction of the server is received, the detection instruction carrying downlink authentication information and the wearable device identification.

On the terminal, in step 330, the downlink authentication information is sent to a wearable device designated in the detection instruction, and uplink authentication information returned by the wearable device is received; the uplink authentication information being generated by the wearable device according to a stored device authentication key and the downlink authentication information.

The terminal receives a detection instruction of the server, extracts the wearable device identification and the downlink authentication information therefrom, and sends the downlink authentication information to a wearable device designated in the detection instruction (i.e., a wearable device having the wearable device identification in the detection instruction). If the wearable device designated in the detection instruction has not yet been connected to the terminal, the terminal needs to first complete a connection with the wearable device according to a wireless local area network protocol supported by the wearable device.

As stated previously, the wearable device designated by the server stores the device authentication key the same as or corresponding to the server authentication key. After the wearable device receives the downlink authentication information, for the downlink authentication information as a plaintext, the wearable device encrypts the downlink authentication information by using the device authentication key, to generate uplink authentication information as a ciphertext. For the downlink authentication information as a ciphertext, the wearable device decrypts the downlink authentication information by using the device authentication key, to generate uplink authentication information as a plaintext. The downlink authentication information as a plaintext corresponds to the uplink authentication information as a ciphertext, and the downlink authentication information as a ciphertext corresponds to the uplink authentication information as a plaintext. The wearable device returns the uplink authentication information to the terminal.

On the terminal, in step 340, a detection acknowledgment that carries the uplink authentication information is sent to the server.

After receiving the uplink authentication information returned by the wearable device, the terminal encapsulates the uplink authentication information in a detection acknowledgment and sends the detection acknowledgment to the server. The detection acknowledgment generally further carries the wearable device identification.

On the server, in step 230, a detection acknowledgment, returned by the terminal, which carries uplink authentication information is received.

On the server, in step 240, the downlink authentication information is matched with the uplink authentication information by using the server authentication key of the user, wherein the user passes the authentication if the matching succeeds.

The server receives the detection acknowledgment returned by the terminal, extracts the uplink authentication information therefrom, and judges whether the uplink authentication information is matched with the downlink authentication information by using the server authentication key of the user, to determine an authentication result of the user. Specifically, for the uplink authentication information as a plaintext, it is possible to compare the uplink authentication information with authentication data for generating a ciphertext or compare the uplink authentication information that has been encrypted by using the server authentication key with the downlink authentication information, if they are the same, the user passes the authentication, and otherwise, the authentication fails. For the uplink authentication information as a ciphertext, the uplink authentication information may be decrypted by using the server authentication key and then compared with the downlink authentication information, if they are the same, the user passes the authentication, and otherwise, the authentication fails.

The server returns to the terminal an authentication result indicating whether the user passes the authentication.

On the terminal, in step 350, a user authentication result determined by the server according to the uplink authentication information, the downlink authentication information, and the server authentication key is received.

In this embodiment, a server authentication key and a device authentication key which are the same or correspond to each other are set on a server and a wearable device, the server authenticates, through interaction with a terminal, a designated wearable device by using the device authentication key stored on the wearable device and the server authentication key stored on the server, thereby accomplishing authentication on a user corresponding to the wearable device. The user neither needs to memorize any account and any password nor needs to input any account and any password during the authentication, which reduces the burden on the user and improves the efficiency of the user for acquiring a network service.

In an implementation, a user public key of the user may be stored on the server, a user private key of the user may be stored on the terminal, a different user identification uses a different user public key and a different user private key, and the user public key and the user private key are a pair of keys in asymmetric encryption. The user public key stored on the server corresponds to the user identification, the wearable device identification, and the server authentication key of the user. In such an implementation, the terminal signs data carried in the detection acknowledgment (which includes the uplink authentication information, and may also include the wearable device identification, the user identification, and other data) by using the stored user private key, and sends the signed detection acknowledgment to the server. The server performs signature verification on the detection acknowledgment by using the user public key of the user. If the detection acknowledgment passes the verification, step 240 is performed to match the uplink authentication information with the downlink authentication information. If the detection acknowledgment fails to pass the signature verification, the terminal is notified that the authentication fails. Such an implementation requires that a terminal to which a wearable device is connected should store a user private key of a user when the user uses the wearable device for authentication, which can achieve better security.

In addition, a terminal identification may be added to the corresponding relationship between the user identification, the wearable device identification, and the server authentication key of the user stored on the server, to restrain the terminal capable of performing user authentication through the wearable device connected thereto. Under such a situation, the server stores a corresponding relationship between the user identification, the wearable device identification, and the server authentication key of the user and the terminal identification. An authentication request sent by the terminal to the server carries a terminal identification of the terminal. After receiving the authentication request, the server finds, in the stored corresponding relationship, a terminal identification corresponding to the user identification or the wearable device identification in the authentication request, and compares the terminal identification with the terminal identification for sending the authentication request. If they are the same, step 220 is performed to continue the authentication process. If they are different, the authentication request of the terminal is rejected, and the user authentication fails. Such an implementation is equivalent to binding a wearable device to a terminal capable of performing user authentication through the wearable device. As a terminal (especially a mobile terminal) generally is also specific to a user, binding a wearable device to the terminal may significantly improve the security of user authentication.

The above authentication process in this embodiment is applicable to any scenario that requires authenticating a user identity, for example, user identity authentication in the case of login, identity authentication when a user accesses a personal account, identity authentication when a user makes a payment through a third-party payment platform, and so on. After the user passes the authentication, the server may provide a subsequent service in the scenario, and the terminal executes a subsequent operation in the scenario. For example, when this embodiment is used for identity authentication in a payment scenario, the authentication request sent by the terminal to a payment server is a payment request. After the user passes the authentication, the payment server may provide a payment service for the user passing the authentication. After receiving, from the server, an authentication result indicating that the user passes the authentication, the terminal may cooperate with the payment server to complete a payment operation of the user.

In this embodiment, it is possible to preset the corresponding relationship between the user identification, the wearable device identification, and the server authentication key of the user on the server and preset the corresponding device authentication key on the wearable device. It is also possible to first generate the above corresponding relationship on the server and write the device authentication key on the wearable device through a registration process before the above authentication process.

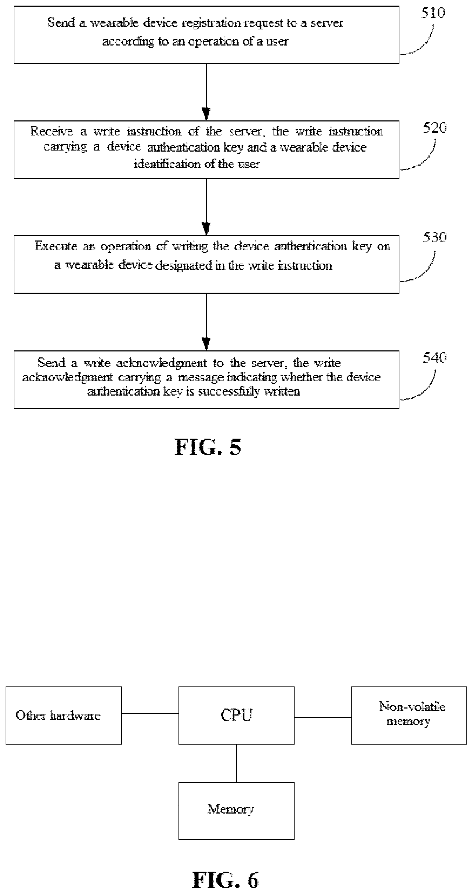

Another embodiment of the present application provides a method for registering a wearable device. A process of the method on a server is as shown in FIG. 4, and a process thereof on a terminal is as shown in FIG. 5.

On the terminal, in step 510, a wearable device registration request is sent to a server according to an operation of a user.

On the server, in step 410, a wearable device registration request sent by a user through a terminal is received.

The user registers a wearable device with the server on the terminal, and the terminal sends a wearable device registration request to the server according to an operation of the user. The registration request includes a user identification and a wearable device identification of the user.

On the server, in step 420, a server authentication key of the user and a device authentication key are acquired, and a write instruction that carries the device authentication key and the wearable device identification of the user is issued to the terminal.

After receiving the wearable device registration request of the terminal, the server acquires, according to an encryption algorithm adopted for the uplink authentication information or downlink authentication information in the authentication process, a server authentication key and a device authentication key that are used for the encryption algorithm and correspond to the wearable device identification. The server authentication key and the device authentication key may be one key (e.g., a key of a symmetric encryption algorithm), and may also be a pair of keys (e.g., a public key and a private key of an asymmetric encryption algorithm). The server may generate the server authentication key and the device authentication key by itself and may also obtain the server authentication key and the device authentication key from another server.

The server encapsulates the acquired device authentication key and the corresponding wearable device identification in a write instruction, and sends the write instruction to the terminal.

On the terminal, in step 520, a write instruction of the server is received, the write instruction carrying a device authentication key and the wearable device identification of the user.

On the terminal, in step 530, an operation of writing the device authentication key is executed on a wearable device designated in the write instruction.

After the terminal receives the write instruction of the server, the terminal sends the device authentication key in the write instruction to a wearable device, to request the wearable device to store the device authentication key. According to a different wearable device and a different setting permission thereof, the wearable device may complete storage of the device authentication key only after the user confirms the write operation. For example, for a wristband, t00000he user generally needs to tap the wristband for confirmation.

On the terminal, in step 540, a write acknowledgment is sent to the server, the write acknowledgment carrying a message indicating whether the device authentication key is successfully written. After completing the write operation with the wearable device, the terminal encapsulates a message indicating whether the device authentication key is successfully written in a write acknowledgment, and sends the write acknowledgment to the server.

On the server, in step 430, a write acknowledgment returned by the terminal is received, and if the write acknowledgment indicates that the device authentication key has been successfully stored in a wearable device designated in the write instruction, a corresponding relationship between the user identification, the wearable device identification, and the server authentication key of the user is stored, and registration of the wearable device is successful. If the message carried in the write acknowledgment is that the device authentication key is not successfully written, the registration process fails. The server sends a registration result to the terminal.

The server may require the terminal to provide a password of the user to improve security of registration of the wearable device. Specifically, the server receives the write acknowledgment of the terminal, and if the message carried in the write acknowledgment is that the device authentication key has been successfully stored in the wearable device, the server issues a password confirmation request to the terminal, to require the terminal to provide a password of the user identification corresponding to the wearable device identification. The terminal receives the password confirmation request of the server, and returns a password confirmation acknowledgment carrying a user password input by the user to the server. The server receives, from the terminal, the password confirmation acknowledgment that carries the user password, and if the user password is correct, stores the corresponding relationship between the user identification, the wearable device identification, and the server authentication key of the user. Registration of the wearable device is successful. If the user password is incorrect, the registration request of the terminal is rejected, and registration fails. The server sends a registration result to the terminal.

In an implementation, a user public key and a user private key of the user may be generated automatically in the registration process. Specifically, after the operation of writing the device authentication key in the wearable device by the terminal is successful, the terminal generates a user public key and a user private key of the user according to an algorithm, stores the generated user private key locally, and encapsulates the user public key in a write acknowledgment and sends the write acknowledgment to the server. After the terminal successfully writes the device authentication key in the wearable device or it is verified that the user password is correct, the server stores a corresponding relationship between the user identification, the wearable device identification, the server authentication key, and the user public key of the user.

In some application scenarios, a server public key and a server private key are preset on the server, and a terminal private key and a terminal public key are preset on the terminal, wherein the server public key and the terminal private key are a pair of keys, and the server private key and the terminal public key are a pair of keys. In these scenarios, in the authentication method embodiment, the server may sign the detection instruction by using the stored server private key, and send the signed detection instruction to the terminal. The terminal performs signature verification on the received detection instruction by using the stored terminal public key, and rejects the detection instruction if the verification fails, and thus the authentication fails. In the registration method embodiment, the server may sign the write instruction by using the stored server private key, and send the signed write instruction to the terminal; the terminal performs signature verification on the received write instruction by using the stored terminal public key, and rejects the write instruction if the verification fails, and thus the registration fails. The terminal may sign the write acknowledgment by using the stored terminal private key, and send the signed write acknowledgment to the server; the server performs signature verification on the received write acknowledgment by using the stored server public key, and rejects the registration request of the terminal if the verification fails.

The server and the terminal may conduct communication through an encrypted channel, to further improve security of wearable device registration and user authentication. For example, the detection instruction and the detection acknowledgment in the authentication method embodiment and the write instruction and the write acknowledgment in the registration method embodiment all can be transmitted in an encrypted channel. Reference may be made to the prior art for implementation of the encrypted channel and an encryption method adopted, which are not repeated.

In an embodiment of the present application, a payment client terminal running on the terminal authenticates a user identity in a payment process by using a wearable device connected to the terminal. A specific process of this embodiment is as follows:
On the wearable device, a payment binding request of the payment client terminal is received, the payment binding request including a device authentication key of the wearable device. The wearable device stores, in response to the payment binding request issued by the user through the payment client terminal, the device authentication key carried in the payment binding request in a local memory.

When making a payment operation on the payment client terminal, the user selects the wearable device to make a payment, triggers a response of the payment client terminal to the above user operation, and sends a payment request to the server. The payment request carries a user identification and/or a wearable device identification of the user.

After receiving the payment request sent by the user through the payment client terminal, the server acquires downlink authentication information, and issues to the payment client terminal an authentication instruction that includes the downlink authentication information and the wearable device identification.

The payment client terminal receives the authentication instruction issued by the server, and carries the downlink authentication information in payment authentication information and sends the payment authentication information to a wearable device designated in the authentication instruction.

The wearable device receives the payment authentication information sent by the payment client terminal, extracts, from the payment authentication information, the downlink authentication information issued by the server based on the payment request of the user sent by the payment client terminal; and generates uplink authentication information according to the stored device authentication key and the downlink authentication information, and sends the uplink authentication information to the payment client terminal.

The payment client terminal receives the uplink authentication information returned by the wearable device, and carries the uplink authentication information in authentication response information and sends the authentication response information to the server.

The server receives the authentication response information that carries the uplink authentication information returned by the payment client terminal, matches the downlink authentication information with the uplink authentication information by using the server authentication key of the user, wherein the user passes the authentication if the matching succeeds, and performs a payment operation after the authentication is successful. The server authentication key of the user is the same as or corresponds to the device authentication key of the wearable device designated in the authentication instruction.

In this embodiment, a server authentication key and a device authentication key which are the same or correspond to each other are set on a server and a wearable device, and the wearable device is authenticated by using the device authentication key and the server authentication key, thereby completing payment authentication on a user corresponding to the wearable device, such that the user can make a payment on a payment client terminal by using the wearable device, and the user neither needs to memorize any account and any password nor needs to input any account and any password during the authentication, which reduces the burden on the user and improves the efficiency of payment.

In an application example of the present application, after registering a wristband with a payment server through a client terminal Application (App) running on a mobile phone terminal, the user can complete network payment through the wristband without inputting any account and any password. A server public key and a terminal private key in a pair as well as a server private key and a terminal public key in a pair are preset on the payment server and the client terminal App. Wherein the payment server may be a server that runs a server terminal program corresponding to the client terminal App, and may also be a server of a third-party payment platform that supports the client terminal App. A specific process is as follows:
A user sends a wearable device registration request to a payment server through a client terminal App (hereinafter referred to as client terminal) running on a mobile phone terminal, to apply for opening of wristband payment, and the client terminal uploads a user identification (an account of the user on the payment server), a mobile phone terminal identification (an IMEI), and a wristband identification (a wristband MAC address) in the registration request to the server.

The payment server generates, through a predetermined algorithm, a symmetric key for authenticating a wristband (that is, a server authentication key and a device authentication key which are the same), signs the symmetric key, the user identification, and the wristband identification together through a preset server private key, encapsulates the signed symmetric key, user identification, and wristband identification in a write instruction, and sends the write instruction to the client terminal through an encrypted channel between the payment server and the client terminal.

After receiving the write instruction of the server terminal, the client terminal first verifies validity of data in the write instruction according to a preset terminal public key, and directly rejects the write instruction if the data is invalid. After the validity verification succeeds, the client terminal is connected to a wristband designated in the write instruction, and after the connection is successful, writes the symmetric key issued by the payment server in the wristband. In the process of writing the symmetric key in the wristband, the user needs to tap the wristband to confirm the write operation, and after the user taps the wristband, the symmetric key is written in a storage area of the wristband.

After the write operation is successful, the client terminal generates a pair of asymmetric keys according to the user identification, i.e., a user public key and a user private key corresponding to the user identification. The client terminal signs a result indicating whether the write operation is successful, the wristband identification, and the generated user public key through a preset terminal private key, encapsulates the signed information in a write acknowledgment, and sends the write acknowledgment to the payment server through an encrypted channel. The user private key is stored locally by the client terminal.

After receiving the write acknowledgment of the client terminal, the payment server verifies the signature of the client terminal through a preset server public key, and rejects the registration request of the client terminal if the verification fails. After the signature verification succeeds, the payment server issues a password confirmation request to the client terminal, to require the client terminal to provide a password of an account of the user on the payment server.

The client terminal displays to the user prompt information of inputting a password, and the user inputs the password of his/her account on the payment server. The client terminal sends a password confirmation acknowledgment canying the received password to the payment server.

The payment server verifies the user password in the password confirmation acknowledgment, after the verification succeeds, stores a corresponding relationship between the symmetric key (the server authentication key), the user identification, the mobile phone identification, the wristband identification, and the user public key generated by the client terminal, and notifies the client terminal that the wristband is registered successfully. The registration process ends.

After the wristband is registered successfully on the payment server, the user sends, when hoping to make a payment through the wristband, a payment authentication request to the server through the client terminal. The authentication request includes information of an order to be paid, a user identification, a mobile phone terminal identification, and a wristband identification.

After receiving the authentication request of the client terminal, the payment server compares the mobile phone terminal identification in the authentication request with the mobile phone terminal identification in the stored corresponding relationship which corresponds to the wristband identification in the authentication request. If they are different, the authentication request is rejected, and the payment fails. If they are the same, the payment server generates random plaintext data, and uses the plaintext data as downlink authentication information. The payment server signs the downlink authentication information, the user identification, and the wristband identification by using a preset server private key, encapsulates them in a detection instruction, and sends the detection instruction to the client terminal through an encrypted channel between the payment server and the client terminal.

After receiving the detection instruction of the payment server, the client terminal first verifies validity of signature data in the detection instruction according to a preset terminal public key. If the data is invalid, the detection instruction is rejected, and the payment fails. After validity verification of the signature is successful, the client terminal is connected to a wristband designated in the detection instruction, and after the connection is successful, sends the downlink authentication information in the detection instruction to the wristband. The wristband encrypts the downlink authentication information by using the stored symmetric key to generate uplink authentication information, and returns the uplink authentication information to the client terminal. The process of encrypting the downlink authentication information by the wristband does not require the user to tap for confirmation, which can further reduce user operations and optimize user experiences.

After receiving the uplink authentication information generated by the wristband, the client terminal signs the uplink authentication information by using a locally stored user private key, encapsulates the signed data and the signed wristband identification in a detection acknowledgment, and sends the detection acknowledgment to the payment server through an encrypted channel between the client terminal and the payment server.

After receiving the detection acknowledgment uploaded by the client terminal, the payment server may perform signature verification on the detection acknowledgment according to the user public key corresponding to the wristband identification in the detection acknowledgment. If the signature verification fails, the authentication request fails. After the signature verification succeeds, the payment server encrypts the downlink authentication information by using a symmetric key corresponding to the wristband identification, compares the encrypted data with the uplink authentication information in the detection acknowledgment, that is, compares whether the downlink authentication information encrypted by the payment server is the same as the downlink authentication information encrypted by the wristband, and if they are the same, returns a message of successful authentication to the client terminal and continues paying an order. If they are different, the payment server returns a message of unsuccessful authentication to the client terminal. After receiving the message of successful authentication, the client terminal completes a user order payment operation together with the payment server. If receiving the message of unsuccessful authentication, the client terminal notifies the user that this payment cannot be completed due to unsuccessful authentication.

Corresponding to implementation of the above process, embodiments of the present application further provide an apparatus for authenticating a user applied to a server, an apparatus for authenticating a user applied to a terminal connected to a wearable device of the user, an apparatus for registering a wearable device applied to a server, an apparatus for registering a wearable device applied to a terminal, a payment apparatus applied to a server, a payment apparatus applied to a terminal, and a payment apparatus applied to a wearable device. All these apparatuses may be implemented through software, and may also be implemented through hardware or through a combination of software and hardware. By taking software implementation as an example, an apparatus in a logical sense is formed by reading a corresponding computer program instruction into a memory through a CPU of a server, a terminal or a wearable device and running the computer program instruction. In terms of the hardware level, in addition to the CPU, the memory, and the non-volatile memory shown in FIG. 6, the terminal or wearable device where the apparatus is located generally further includes other hardware such as a chip for sending and receiving wireless signals, and the server where the apparatus is located generally further includes other hardware such as a board card for implementing a network communication function.

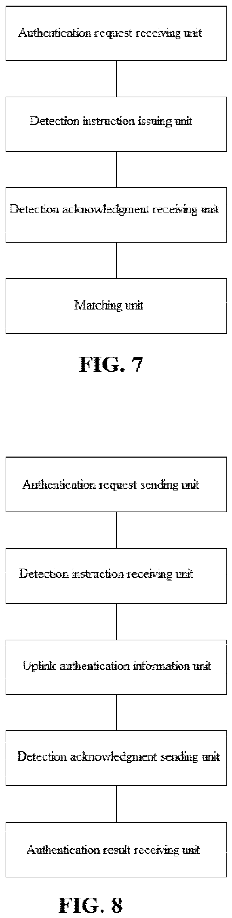

FIG. 7 shows an apparatus for authenticating a user according to this embodiment. The apparatus is applied to a server, and the server stores a corresponding relationship between a user identification, a wearable device identification, and a server authentication key of the user. The apparatus includes an authentication request receiving unit, a detection instruction issuing unit, a detection acknowledgment receiving unit, and a matching unit, wherein the authentication request receiving unit is configured to receive an authentication request sent by the user through a terminal, the authentication request carrying the user identification and/or the wearable device identification of the user; the detection instruction issuing unit is configured to acquire downlink authentication information, and issue to the terminal a detection instruction that carries the downlink authentication information and the wearable device identification of the user; the detection acknowledgment receiving unit is configured to receive a detection acknowledgment, returned by the terminal, which carries uplink authentication information, the uplink authentication information being generated, by a wearable device designated in the detection instruction, according to a device authentication key and the downlink authentication information, and the device authentication key being the same as or corresponding to the server authentication key; and the matching unit is configured to match the downlink authentication information with the uplink authentication information by using the server authentication key of the user, wherein the user passes the authentication if the matching succeeds.

Optionally, the server further stores a user public key of the user, the user public key corresponds to the user identification, the wearable device identification, and the server authentication key of the user, and the user public key and a user private key stored in the terminal are a pair of keys. The detection acknowledgment returned by the terminal is signed by using the user private key stored in the terminal. The apparatus further includes: a detection acknowledgment verification unit configured to perform signature verification on the detection acknowledgment of the terminal according to the user public key of the user, wherein the authentication on the user fails if the verification fails.

Optionally, the server further stores a terminal identification, and the terminal identification corresponds to the user identification, the wearable device identification, and the server authentication key of the user. The authentication request further includes: a terminal identification for sending the authentication request. The apparatus further includes: a terminal identification verification unit configured to, when the terminal identification corresponding to the user identification or the wearable device identification in the authentication request is different from the terminal identification for sending the authentication request, verify that the authentication on the user fails.

Optionally, the server further stores a server private key, and the server private key and a terminal public key stored in the terminal are a pair of keys;. The apparatus further includes: a detection instruction signing unit configured to sign the detection instruction by using the server private key.

Optionally, the server is a payment server, and the authentication request is a payment request. The apparatus further includes: a payment service unit configured to provide a payment service for a user passing the authentication.

FIG. 8 shows an apparatus for authenticating a user according to this embodiment. The apparatus is applied to a terminal connected to a wearable device of the user. The apparatus includes an authentication request sending unit, a detection instruction receiving unit, an uplink authentication information unit, a detection acknowledgment sending unit, and an authentication result receiving unit, wherein the authentication request sending unit is configured to send an authentication request to a server according to an operation of the user, the authentication request carrying a user identification and/or a wearable device identification of the user; the detection instruction receiving unit is configured to receive a detection instruction of the server, the detection instruction canying downlink authentication information and the wearable device identification; the uplink authentication information unit is configured to send the downlink authentication information to a wearable device designated in the detection instruction, and receive uplink authentication information returned by the wearable device; the uplink authentication information being generated by the wearable device according to a stored device authentication key and the downlink authentication information, and the device authentication key being the same as or corresponding to a server authentication key stored in the server; the detection acknowledgment sending unit is configured to send to the server a detection acknowledgment that carries the uplink authentication information; and the authentication result receiving unit is configured to receive a user authentication result determined by the server according to the uplink authentication information, the downlink authentication information, and the server authentication key.

Optionally, the terminal stores a user private key of the user, and the user private key and a user public key stored in the server are a pair of keys. The apparatus further includes: a detection acknowledgment signing unit configured to sign the detection acknowledgment by using the user private key of the user.

Optionally, the terminal stores a terminal public key, and the terminal public key and a server private key stored in the server are a pair of keys. The detection instruction issued by the server is signed by using the server private key. The apparatus further includes: a detection instruction verification unit configured to perform signature verification on the detection instruction of the server according to the terminal public key, and reject the detection instruction if the verification fails.

Optionally, the authentication request is a payment request, and the terminal completes a payment operation of the user after the user authentication result is the authentication being successful.

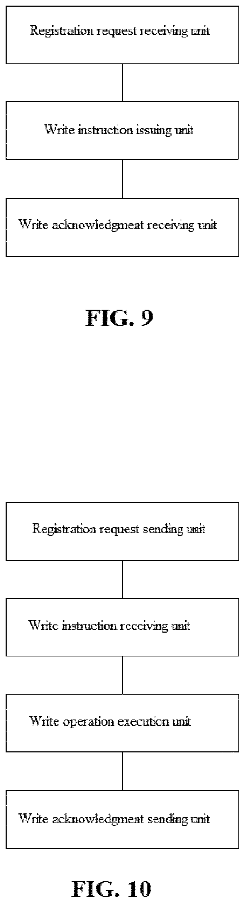

FIG. 9 shows an apparatus for registering a wearable device according to this embodiment. The apparatus is applied to a server. When being divided in terms of functions, the apparatus further includes a registration request receiving unit, a write instruction issuing unit, and a write acknowledgment receiving unit, wherein the registration request receiving unit is configured to receive a wearable device registration request sent by a user through a terminal, the registration request carrying a user identification and a wearable device identification of the user; the write instruction issuing unit is configured to acquire a server authentication key of the user and a device authentication key, and issue to the terminal a write instruction that carries the device authentication key and the wearable device identification of the user; and the write acknowledgment receiving unit is configured to receive a write acknowledgment returned by the terminal, and if the write acknowledgment indicates that the device authentication key has been successfully stored in a wearable device designated in the write instruction, store a corresponding relationship between the user identification, the wearable device identification, and the server authentication key of the user.

Optionally, the write acknowledgment receiving unit includes: a password confirmation request issuing module configured to issue a password confirmation request to the terminal when the write acknowledgment indicates that the device authentication key has been successfully stored in the wearable device designated in the write instruction; and a password confirmation acknowledgment receiving module configured to receive, from the terminal, a password confirmation acknowledgment that carries a user password, and if the user password is correct, store the corresponding relationship between the user identification, the wearable device identification, and the server authentication key of the user.

Optionally, the write acknowledgment returned by the terminal further includes a user public key generated by the terminal; and the password confirmation acknowledgment receiving unit is specifically configured to: receive, from the terminal, a password confirmation acknowledgment that carries a user password, and if the user password is correct, store a corresponding relationship between the user identification, the wearable device identification, the server authentication key, and the user public key of the user.

Optionally, the server further stores a server private key and a server public key. The server private key and a terminal public key stored in the terminal are a pair of keys; and the server public key and a terminal private key stored in the terminal are a pair of keys. The apparatus further includes: a write instruction signing unit configured to sign the write instruction by using the server private key. The apparatus further includes: a write acknowledgment verification unit configured to perform signature verification on the write acknowledgment of the terminal by using the server public key, and reject the registration request if the verification fails.

FIG. 10 shows an apparatus for registering a wearable device according to this embodiment. The apparatus is applied to a terminal. By dividing in terms of functions, the apparatus further includes a registration request sending unit, a write instruction receiving unit, a write operation execution unit, and a write acknowledgment sending unit, wherein the registration request sending unit is configured to send a wearable device registration request to a server according to an operation of a user, the registration request carrying a user identification and a wearable device identification of the user; the write instruction receiving unit is configured to receive a write instruction of the server, the write instruction carrying a device authentication key and the wearable device identification of the user; the write operation execution unit is configured to execute an operation of writing the device authentication key on a wearable device designated in the write instruction; and the write acknowledgment sending unit is configured to send a write acknowledgment to the server, the write acknowledgment carrying a message indicating whether the device authentication key is successfully written.

Optionally, the apparatus further includes a password confirmation request receiving unit configured to, after the write acknowledgment is sent to the server, receive a password confirmation request of the server, and return to the server a password confirmation acknowledgement carrying a user password input by the user.

Optionally, the apparatus further includes a user key generation unit configured to, after the operation of writing the device authentication key is successful, generate a user private key and a user public key of the user, and store the user private key; and the write acknowledgment further carries the user public key of the user.

Optionally, the terminal stores a terminal public key and a terminal private key. The terminal public key and a server private key stored in the server are a pair of keys; and the terminal private key and a server public key stored in the server are a pair of keys. The apparatus further includes: a write instruction verification unit configured to perform signature verification on the write instruction of the server by using the terminal public key, and reject the write instruction if the verification fails. The apparatus further includes: a write acknowledgment signing unit configured to sign the write acknowledgment by using the terminal private key.

An embodiment of the present application provides a payment apparatus, applied to a server. By dividing in terms of functions, the apparatus includes a payment request receiving unit, an authentication instruction issuing unit, an authentication response receiving unit, and a payment matching unit, wherein the payment request receiving unit is configured to receive a payment request sent by a user through a payment client terminal, the payment request carrying a user identification and/or a wearable device identification of the user; the authentication instruction issuing unit is configured to acquire downlink authentication information, and issue to the payment client terminal an authentication instruction that includes the downlink authentication information and the wearable device identification; the authentication response receiving unit is configured to receive authentication response information, returned by the payment client terminal, which carries uplink authentication information, the uplink authentication information being generated, by a wearable device designated in the authentication instruction, according to a device authentication key and the downlink authentication information, and the device authentication key being the same as or corresponding to a server authentication key; and the payment matching unit is configured to match the downlink authentication information with the uplink authentication information by using the server authentication key of the user, wherein the user passes the authentication if the matching succeeds, and a payment operation is performed after the authentication is successful.

Optionally, the payment request is triggered by information which is selected by the user on the payment client terminal and indicates making a payment by a wearable device.

An embodiment of the present application provides a payment apparatus, applied to a terminal. By dividing in terms of functions, the apparatus includes a payment request sending unit, an authentication instruction receiving unit, and an authentication response sending unit, wherein the payment request sending unit is configured to send a payment request to a server in response to a payment operation of a user on a payment client terminal, the payment request carrying a user identification and/or a wearable device identification of the user; the authentication instruction receiving unit is configured to receive an authentication instruction, issued by the server, which includes downlink authentication information and the wearable device identification, and send the downlink authentication information to a wearable device, so that the wearable device generates uplink authentication information by using a device authentication key stored by the wearable device and the downlink authentication information; and the authentication response sending unit is configured to receive the uplink authentication information returned by the wearable device, and send the uplink authentication information to the server, so that the server authenticates the user according to the uplink authentication information and performs a payment operation after the authentication is successful.

Optionally, the payment operation of the user on the payment client terminal is specifically an operation which is selected by the user and indicates making a payment by a wearable device.

An embodiment of the present application provides a payment apparatus for a wearable device, applied to the wearable device. By dividing in terms of functions, the payment apparatus includes a payment authentication information receiving unit and an uplink authentication information generation unit, wherein the payment authentication information receiving unit is configured to receive payment authentication information sent by a payment client terminal, the payment authentication information including downlink authentication information issued by a server based on a payment request of a user sent by the payment client terminal; and the uplink authentication information generation unit is configured to generate uplink authentication information according to a stored device authentication key and the downlink authentication information, and send the uplink authentication information to the payment client terminal, so that the payment client terminal sends the uplink authentication information to the server, such that the server can authenticate the user based on the uplink authentication information and perform a payment operation after the authentication is successful.

Optionally, the apparatus further includes: a payment binding unit configured to store, in response to a payment binding request issued by the user through the payment client terminal, a device authentication key carried in the payment binding request.

The above are merely preferred embodiments of the present application, which are not used to limit the present application.

In a typical configuration, the computing device includes one or more processors (CPUs), an input/output interface, a network interface, and a memory.

The memory may include a volatile memory, a random access memory (RAM) and/or a non-volatile memory or the like in a computer readable medium, for example, a read-only memory (ROM) or a flash RAM. The memory is an example of the computer readable medium.

The computer readable medium includes non-volatile or volatile, and movable or non-movable media, and can implement information storage by means of any method or technology. Information may be a computer readable instruction, a data structure, and a module of a program or other data. A storage medium of a computer includes, for example, but is not limited to, a phase change memory (PRAM), a static random access memory (SRAM), a dynamic random access memory (DRAM), other types of random access memories (RAMs), a read-only memory (ROM), an electrically erasable programmable read-only memory (EEPROM), a flash memory or other memory technologies, a compact disc read-only memory (CD-ROM), a digital versatile disc (DVD) or other optical storages, a cassette tape, a magnetic tape/magnetic disk storage or other magnetic storage devices, or any other non-transmission medium, and can be used to store information accessible to the computing device. According to the definition in this text, the computer readable medium does not include transitory media, such as a modulated data signal and a carrier.

It should be further noted that, the terms "include", "comprise", or any other variants thereof are intended to cover a non-exclusive inclusion, such that a process, a method, a commodity or a device that includes a series of elements not only includes such elements but also includes other elements not specified expressly, or may further include inherent elements of the process, method, commodity, or device. Without more restrictions, an element limited by the phrase "include a/an..." does not exclude other same elements existing in the process, method, commodity, or device that includes the element.

Persons skilled in the art should understand that, the embodiments of the present application may be provided as a method, a system, or a computer program product. Therefore, the present application may be implemented in the form of a complete hardware embodiment, a complete software embodiment, or an embodiment combining software and hardware. Moreover, the present application may employ the form of a computer program product implemented on one or more computer usable storage media (including, but not limited to, a magnetic disk memory, a CD-ROM, an optical memory, and the like) including computer usable program code.

## Claims

1. A method for authenticating a user, performed on a server, wherein the server stores a corresponding relationship between a user identification of a user, a wearable device identification of a wearable device of the user, and a server authentication key of the user, the method comprising:
receiving a request from the user on a terminal for a service, from the server, requiring identity authentication;
receiving an authentication request sent by the terminal according to an operation of the user, the authentication request carrying the user identification and/or the wearable device identification (210);
acquiring downlink authentication information, and issuing to the terminal a detection instruction that carries the downlink authentication information and the wearable device identification of the user (220);
receiving a detection acknowledgment, returned by the terminal, which carries uplink authentication information, the uplink authentication information being generated, by a wearable device designated in the detection instruction, according to a device authentication key and the downlink authentication information, and the device authentication key being the same as or corresponding to the server authentication key (230);
matching the downlink authentication information with the uplink authentication information by using the server authentication key of the user, to determine a user authentication result for the user, wherein the user passes the authentication if the matching succeeds (240);
sending, to the terminal, the user authentication result; and
performing the requested service for the user on the terminal if the user passes the authentication.

2. The method of claim 1, wherein the server further stores a user public key of the user, the user public key corresponds to the user identification, the wearable device identification, and the server authentication key of the user, and the user public key and a user private key stored in the terminal are a pair of keys;
the detection acknowledgment returned by the terminal is signed by using the user private key stored in the terminal; and
the method further comprises: performing signature verification on the detection acknowledgment of the terminal according to the user public key of the user, wherein the authentication on the user fails if the verification fails.

3. The method of claim 1, wherein the server further stores a terminal identification, and the terminal identification corresponds to the user identification, the wearable device identification, and the server authentication key of the user;
the authentication request further comprises: a terminal identification for sending the authentication request; and
the method further comprises: if the terminal identification corresponding to the user identification or the wearable device identification in the authentication request is different from the terminal identification for sending the authentication request, the authentication of the user fails.

4. The method of any one of claims 1 to 3, wherein the server further stores a server private key, and the server private key and a terminal public key stored in the terminal are a pair of keys; and
the method further comprises: signing the detection instruction by using the server private key.

5. The method of any one of claims 1 to 3, wherein the detection instruction and the detection acknowledgment are transmitted through an encrypted channel between the server and the terminal.

6. The method of any one of claims 1 to 3, wherein the server is a payment server, and the authentication request is a payment request; and
the method further comprises: providing a payment service for a user passing the authentication.

7. The method of any one of claims 1 to 6, further comprising registering the wearable device, comprising:
receiving a wearable device registration request sent by the terminal according to an operation of the user, the registration request carrying a user identification and a wearable device identification of the user (410);
acquiring a server authentication key of the user and a device authentication key, and issuing to the terminal a write instruction that carries the device authentication key and the wearable device identification of the user (420); and
receiving a write acknowledgment returned by the terminal, and if the write acknowledgment indicates that the device authentication key has been successfully stored in a wearable device designated in the write instruction, storing a corresponding relationship between the user identification, the wearable device identification, and the server authentication key of the user (430).

8. The method of claim 7, wherein the storing a corresponding relationship between the user identification, the wearable device identification, and the server authentication key of the user comprises:
issuing a password confirmation request to the terminal; and
receiving, from the terminal, a password confirmation acknowledgment that carries a user password, and if the user password is correct, storing the corresponding relationship between the user identification, the wearable device identification, and the server authentication key of the user.

9. The method of claim 7 or 8, wherein the write acknowledgment returned by the terminal further comprises a user public key generated by the terminal; and
the storing a corresponding relationship between the user identification, the wearable device identification, and the server authentication key of the user further comprises: storing a corresponding relationship between the user identification, the wearable device identification, the server authentication key, and the user public key of the user.

10. The method of claim 7 or 8, wherein the server further stores a server private key and a server public key; the server private key and a terminal public key stored in the terminal are a pair of keys; and the server public key and a terminal private key stored in the terminal are a pair of keys;
the method further comprises: signing the write instruction by using the server private key; and
the method further comprises: performing signature verification on the write acknowledgment of the terminal by using the server public key, and rejecting the registration request if the verification fails.

11. A method for authenticating a user, performed on a terminal connected to a wearable device of the user, the method comprising:
sending a request from the user on the terminal for a service, from a server, requiring identity authentication;
sending an authentication request to the server according to an operation of the user, the authentication request carrying a user identification and/or a wearable device identification of the wearable device of the user (310);
receiving a detection instruction of the server, the detection instruction carrying downlink authentication information and the wearable device identification (320);
sending the downlink authentication information to the wearable device designated in the detection instruction, and receiving uplink authentication information returned by the wearable device; the uplink authentication information being generated by the wearable device according to a stored device authentication key and the downlink authentication information, and the device authentication key being the same as or corresponding to a server authentication key stored in the server (330);
sending to the server a detection acknowledgment that carries the uplink authentication information (340);
authenticating the user, including receiving a user authentication result determined by the server according to the uplink authentication information, the downlink authentication information, and the server authentication key (350); and
executing operations of the requested service on the terminal for the user if the user passes the authentication.

12. The method of claim 11, wherein the terminal stores a user private key of the user, and the user private key and a user public key stored in the server are a pair of keys; and
the method further comprises: signing the detection acknowledgment by using the user private key of the user.

13. The method of claim 11 or 12, wherein the terminal stores a terminal public key, and the terminal public key and a server private key stored in the server are a pair of keys;
the detection instruction issued by the server is signed by using the server private key; and
the method further comprises: performing signature verification on the detection instruction of the server according to the terminal public key, and rejecting the detection instruction if the verification fails.

14. The method of claim 11 or 12, wherein the authentication request is a payment request, and the terminal completes a payment operation of the user after the user authentication result is the authentication being successful.

15. The method of any one of claims 11 to 14, further comprising registering the wearable device, comprising:
sending a wearable device registration request to a server according to an operation of a user, the registration request carrying a user identification and a wearable device identification of the user (510);
receiving a write instruction of the server, the write instruction carrying a device authentication key and the wearable device identification of the user (520);
executing an operation of writing the device authentication key on a wearable device designated in the write instruction (530); and
sending a write acknowledgment to the server, the write acknowledgment carrying a message indicating whether the device authentication key is successfully written (540).

16. The method of claim 15, wherein the method further comprises: after the write acknowledgment is sent to the server, receiving a password confirmation request of the server, and returning to the server a password confirmation acknowledgment carrying a user password input by the user.

17. The method of claim 15 or 16, wherein the method further comprises: after the operation of writing the device authentication key is successful, generating a user private key and a user public key of the user, and storing the user private key; and
the write acknowledgment further carries the user public key of the user.

18. The method of claim 15 or 16, wherein the terminal stores a terminal public key and a terminal private key; the terminal public key and a server private key stored in the server are a pair of keys; and the terminal private key and a server public key stored in the server are a pair of keys;
the method further comprises: performing signature verification on the write instruction of the server by using the terminal public key, and rejecting the write instruction if the verification fails; and
the method further comprises: signing the write acknowledgment by using the terminal private key.

19. An apparatus for authenticating a user and registering a wearable device for a server, wherein the server stores a corresponding relationship between a user identification, a wearable device identification, and a server authentication key of the user, the apparatus comprising multiple modules configured to perform any one of claims 1 - 10.

20. An apparatus for authenticating a user and registering a wearable device for a terminal connected to a wearable device of the user, wherein the apparatus comprises multiple modules configured to perform any one of claims 11 - 18.

## Patentansprüche

1. Verfahren zum Authentifizieren eines Benutzers, das auf einem Server durchgeführt wird, wobei der Server eine entsprechende Beziehung zwischen einer Benutzeridentifikation eines Benutzers, einer Identifikation eines tragbaren Geräts eines tragbaren Geräts des Benutzers und einem Serverauthentifizierungs-Schlüssel des Benutzers speichert, das Verfahren Folgendes umfassend:
Empfangen einer Anforderung vom Benutzer auf einem Terminal für einen Dienst vom Server, die eine Identitätsauthentifizierung erfordert;
Empfangen einer vom Terminal gemäß einer Aktion des Benutzers gesendeten Authentifizierungsanforderung, wobei die Authentifizierungsanforderung die Benutzeridentifikation und/oder die Identifikation (210) des tragbaren Geräts enthält;
Erfassen von Downlink-Authentifizierungs-Informationen und Ausgeben einer Erkennungsanweisung an das Terminal, die die Downlink-Authentifizierungs-Informationen und die Identifikation (220) des tragbaren Geräts des Benutzers enthält;
Empfangen einer vom Terminal zurückgegebenen Erkennungsbestätigung, die Uplink-Authentifizierungs-Informationen enthält, wobei die Uplink-Authentifizierungs-Informationen von einem in der Erkennungsanweisung angegebenen tragbaren Gerät gemäß einem Geräteauthentifizierungs-Schlüssel und den Downlink-Authentifizierungs-Informationen erzeugt werden und wobei der Geräteauthenifizierungs-Schlüssel mit dem Serverauthentifizierungs-Schlüssel (230) identisch ist oder diesem entspricht;
Abgleichen der Downlink-Authentifizierungs-Informationen mit den Uplink-Authentifizierungs-Informationen unter Verwendung des Serverauthentifizierungs-Schlüssels des Benutzers, um ein Benutzerauthentifizierungs-Ergebnis für den Benutzer zu bestimmen, wobei der Benutzer die Authentifizierung besteht, wenn der Abgleich erfolgreich ist (240);
Senden des Benutzerauthentifizierungs-Ergebnisses an das Terminal; und
Ausführen des angeforderten Dienstes für den Benutzer auf dem Terminal, wenn der enutzer die Authentifizierung besteht.

2. Verfahren nach Anspruch 1, wobei der Server ferner einen öffentlichen Benutzerschlüssel des Benutzers speichert, der öffentliche Benutzerschlüssel der Benutzeridentifikation, der Identifikation des tragbaren Geräts und dem Serverauthentifizierungs-Schlüssel des Benutzers entspricht und der öffentliche Benutzerschlüssel und ein im Terminal gespeicherter privater Benutzerschlüssel ein Schlüsselpaar sind;
die vom Terminal zurückgegebene Erkennungsbestätigung unter Verwendung des im Terminal gespeicherten privaten Benutzerschlüssels signiert wird; und
das Verfahren ferner umfassend:
Durchführen einer Signaturüberprüfung der Erkennungsbestätigung des Terminals gemäß dem öffentlichen Benutzerschlüssel des Benutzers, wobei die Authentifizierung für den Benutzer fehlschlägt, wenn die Überprüfung fehlschlägt.

3. Verfahren nach Anspruch 1, wobei der Server ferner eine Terminalidentifikation speichert und die Terminalidentifikation der Benutzeridentifikation, der Identifikation des tragbaren Geräts und dem Serverauthentifizierungs-Schlüssel des Benutzers entspricht;
die Authentifizierungsanforderung ferner umfassend:
eine Terminalidentifikation zum Senden der Authentifizierungsanforderung; und
das Verfahren ferner umfassend:
dass, wenn sich die Terminalidentifikation, die der Benutzeridentifikation oder der Identifikation des tragbaren Geräts in der Authentifizierungsanforderung entspricht, von der Terminalidentifikation zum Senden der Authentifizierungsanforderung unterscheidet, die Authentifizierung des Benutzers fehlschlägt.

4. Verfahren nach einem der Ansprüche 1 bis 3, wobei der Server ferner einen privaten Serverschlüssel speichert und der private Serverschlüssel und ein im Terminal gespeicherter öffentlicher Terminalschlüssel ein Schlüsselpaar sind; und
das Verfahren ferner umfassend:
Signieren der Erkennungsanweisung unter Verwendung des privaten Serverschlüssels.

5. Verfahren nach einem der Ansprüche 1 bis 3, wobei die Erkennungsanweisung und die Erkennungsbestätigung über einen verschlüsselten Kanal zwischen dem Server und dem Terminal übertragen werden.

6. Verfahren nach einem der Ansprüche 1 bis 3, wobei der Server ein Zahlungsserver ist und die Authentifizierungsanforderung eine Zahlungsanforderung ist; und
das Verfahren ferner umfassend:
Bereitstellung eines Zahlungsdienstes für einen Benutzer, der die Authentifizierung besteht.

7. Verfahren nach einem der Ansprüche 1 bis 6, ferner umfassend das Registrieren des tragbaren Geräts, das umfasst:
Empfangen einer Registrierungsanforderung für ein tragbares Gerät, die vom Terminal gemäß einer Aktion des Benutzers gesendet wird, wobei die Registrierungsanforderung eine Benutzeridentifikation und eine Identifikation des tragbaren Geräts des Benutzers enthält (410);
Erfassen eines Serverauthentifizierungs-Schlüssels des Benutzers und eines Geräteauthentifizierungs-Schlüssels und Ausgeben einer Schreibanweisung an das Terminal, die den Geräteauthentifizierungs-Schlüssel und die Identifikation des tragbaren Geräts des Benutzers enthält (420); und
Empfangen einer vom Terminal zurückgegebenen Schreibbestätigung und wenn die chreibbestätigung anzeigt, dass der Geräteauthentifizierungs-Schlüssel erfolgreich in einem tragbaren Gerät gespeichert wurde, das in der Schreibanweisung angegeben ist, Speichern einer entsprechenden Beziehung zwischen der Benutzeridentifikation, der Identifikation des tragbaren Geräts und dem Serverauthentifizierungs-Schlüssel des Benutzers (430).

8. Verfahren nach Anspruch 7, wobei das Speichern einer entsprechenden Beziehung zwischen der Benutzeridentifikation, der Identifikation des tragbaren Geräts und dem Serverauthentifizierungs-Schlüssel des Benutzers umfasst:
Ausgeben einer Passwortbestätigungs-Anforderung an das Terminal; und
Empfangen einer Kennwortbestätigungs-Bestätigung vom Terminal, die ein enutzerkennwort enthält, und wenn das Benutzerkennwort korrekt ist, Speichern der entsprechenden Beziehung zwischen der Benutzeridentifikation, der Identifikation des tragbaren Geräts und dem Serverauthentifizierungs-Schlüssel des Benutzers.

9. Verfahren nach Anspruch 7 oder 8, wobei die vom Terminal zurückgegebene Schreibbestätigung ferner einen vom Terminal erzeugten öffentlichen Benutzerschlüssel umfasst; und
das Speichern einer entsprechenden Beziehung zwischen der Benutzeridentifikation, der Identifikation des tragbaren Geräts und dem Serverauthentifizierungs-Schlüssel des Benutzers ferner umfasst:
Speichern einer entsprechenden Beziehung zwischen der Benutzeridentifikation, der Identifikation des tragbaren Geräts, dem Serverauthentifizierungs-Schlüssel und dem öffentlichen Benutzerschlüssel des Benutzers.

10. Verfahren nach Anspruch 7 oder 8, wobei der Server ferner einen privaten Serverschlüssel und einen öffentlichen Serverschlüssel speichert;
der private Serverschlüssel und ein im Terminal gespeicherter öffentlicher Terminalschlüssel ein Schlüsselpaar sind; und
der öffentliche Serverschlüssel und ein im Terminal gespeicherter privater Terminalschlüssel ein Schlüsselpaar sind;
das Verfahren ferner umfassend:
Signieren der Schreibanweisung unter Verwendung des privaten Serverschlüssels; und
das Verfahren ferner umfassend:
Durchführen einer Signaturüberprüfung der Schreibbestätigung des Terminals unter Verwendung des öffentlichen Serverschlüssels und Ablehnen der Registrierungsanforderung, wenn die Überprüfung fehlschlägt.

11. Verfahren zum Authentifizieren eines Benutzers, das an einem Terminal durchgeführt wird, das mit einem tragbaren Gerät des Benutzers verbunden ist, das Verfahren umfassend:
Senden einer Anforderung vom Benutzer auf dem Terminal für einen Dienst von einem Server, die eine Identitätsauthentifizierung erfordert;
Senden einer Authentifizierungsanforderung an den Server gemäß einer Aktion des Benutzers, wobei die Authentifizierungsanforderung eine Benutzeridentifikation und/oder eine Identifikation eines tragbaren Geräts des tragbaren Geräts des Benutzers enthält (310);
Empfangen einer Erkennungsanweisung des Servers, wobei die Erkennungsanweisung Downlink-Authentifizierungsinformationen und die Identifikation des tragbaren Geräts enthält (320);
Senden der Downlink-Authentifizierungs-Informationen an das in der Erkennungsanweisung angegebene tragbare Gerät und Empfangen von Uplink-Authentifizierungs-Informationen, die von dem tragbaren Gerät zurückgegeben werden;
wobei die Uplink-Authentifizierungs-Informationen von dem tragbaren Gerät gemäß einem gespeicherten Geräteauthentifizierungs-Schlüssel und den Downlink-Authentifizierungs-Informationen erzeugt werden, und wobei der Geräteauthentifizierungs-Schlüssel mit einem im Server gespeicherten Serverauthentifizierungs-Schlüssel identisch ist oder diesem entspricht (330);
Senden einer Erkennungsbestätigung an den Server, die die Uplink-Authentifizierungs-Informationen enthält (340);
Authentifizieren des Benutzers, einschließlich Empfangen eines Benutzerauthentifizierungs-Ergebnisses, das vom Server gemäß den Uplink-Authentifizierungs-Informationen, den Downlink-Authentifizierungs-Informationen und dem Serverauthentifizierungs-Schlüssel bestimmt wird (350); und
Ausführen von Aktionen des angeforderten Dienstes am Terminal für den Benutzer, wenn der Benutzer die Authentifizierung besteht.

12. Verfahren nach Anspruch 11, wobei das Terminal einen privaten Benutzerschlüssel des Benutzers speichert und der private Benutzerschlüssel und ein am Server gespeicherter öffentlicher Benutzerschlüssel ein Schlüsselpaar sind; und
das Verfahren ferner umfassend:
Signieren der Erkennungsbestätigung unter Verwendung des privaten Benutzerschlüssels des Benutzers.

13. Verfahren nach Anspruch 11 oder 12, wobei das Terminal einen öffentlichen Terminalschlüssel speichert und der öffentliche Terminalschlüssel und ein am Server gespeicherter privater Serverschlüssel ein Schlüsselpaar sind;
die vom Server ausgegebene Erkennungsanweisung unter Verwendung des privaten Serverschlüssels signiert wird; und
das Verfahren ferner umfassend:
Durchführen einer Signaturüberprüfung der Erkennungsanweisung des Servers gemäß dem öffentlichen Terminalschlüssel und Ablehnen der Erkennungsanweisung, wenn die Überprüfung fehlschlägt.

14. Verfahren nach Anspruch 11 oder 12, wobei die Authentifizierungsanforderung eine Zahlungsanforderung ist und das Terminal einen Zahlungsvorgang des Benutzers abschließt, nachdem das Benutzerauthentifizierungs-Ergebnis die erfolgreiche Authentifizierung ist.

15. Verfahren nach einem der Ansprüche 11 bis 14, ferner umfassend das Registrieren des tragbaren Geräts, das umfasst:
Senden einer Registrierungsanforderung für ein tragbares Gerät an einen Server gemäß einer Aktion eines Benutzers, wobei die Registrierungsanforderung eine Benutzeridentifikation und eine Identifikation des tragbaren Geräts des Benutzers enthält (510);
Empfangen einer Schreibanweisung des Servers, wobei die Schreibanweisung einen Geräteauthentifizierungs-Schlüssel und die Identifikation des tragbaren Geräts des Benutzers enthält (520);
Ausführen einer Aktion des Schreibens des Geräteauthentifizierungs-Schlüssels auf ein tragbares Gerät, das in der Schreibanweisung angegeben ist (530); und
Senden einer Schreibbestätigung an den Server, wobei die Schreibbestätigung eine Nachricht enthält, die angibt, ob der Geräteauthentifizierungs-Schlüssel erfolgreich geschrieben wurde (540).

16. Verfahren nach Anspruch 15, das Verfahren ferner umfassend:
nachdem die Schreibbestätigung an den Server gesendet wurde, Empfangen einer Kennwortbestätigungsanforderung des Servers und Zurückgeben einer Kennwortbestätigungs-Bestätigung an den Server, die ein vom Benutzer eingegebenes Benutzerkennwort enthält.

17. Verfahren nach Anspruch 15 oder 16, das Verfahren ferner umfassend:
nachdem die Aktion des Schreibens des Geräteauthentifizierungs-Schlüssels erfolgreich war, Erzeugen eines privaten Benutzerschlüssels und eines öffentlichen Benutzerschlüssels des Benutzers und Speichern des privaten Benutzerschlüssels; und
wobei die Schreibbestätigung ferner den öffentlichen Benutzerschlüssel des Benutzers enthält.

18. Verfahren nach Anspruch 15 oder 16, wobei das Terminal einen öffentlichen Terminalschlüssel und einen privaten Terminalschlüssel speichert;
der öffentliche Terminalschlüssel und ein auf dem Server gespeicherter privater Serverschlüssel ein Schlüsselpaar sind; und
der private Terminalschlüssel und ein auf dem Server gespeicherter öffentlicher Serverschlüssel ein Schlüsselpaar sind;
das Verfahren ferner umfassend:
Durchführen einer Signaturüberprüfung der Schreibanweisung des Servers unter Verwendung des öffentlichen Terminalschlüssels und Ablehnen der Schreibanweisung, wenn die Überprüfung fehlschlägt; und
das Verfahren ferner umfassend:
Signieren der Schreibbestätigung unter Verwendung des privaten Terminalschlüssel.

19. Vorrichtung zum Authentifizieren eines Benutzers und Registrieren eines tragbaren Geräts für einen Server, wobei der Server eine entsprechende Beziehung zwischen einer Benutzeridentifikation, einer Identifikation des tragbaren Geräts und einem Serverauthentifizierungsschlüssel des Benutzers speichert, wobei die Vorrichtung mehrere Module umfasst, die für das Ausführen eines beliebigen der Ansprüche 1 bis 10 konfiguriert sind.

20. Vorrichtung zum Authentifizieren eines Benutzers und Registrieren eines tragbaren Geräts für ein Terminal, mit einem tragbaren Gerät des Benutzers verbunden, wobei die Vorrichtung mehrere Module umfasst, die zum Ausführen eines beliebigen der Ansprüche 11 bis 18 konfiguriert sind.

## Revendications

1. Procédé d'authentification d'un utilisateur, réalisé sur un serveur, dans lequel le serveur stocke une relation correspondante entre une identification d'utilisateur d'un utilisateur, une identification de dispositif portable d'un dispositif portable de l'utilisateur, et une clé d'authentification de serveur de l'utilisateur, le procédé comprenant :
la réception d'une demande de l'utilisateur sur un terminal pour un service, à partir du serveur, nécessitant une authentification d'identité ;
la réception d'une demande d'authentification envoyée par le terminal selon une opération de l'utilisateur, la demande d'authentification portant l'identification dl'utilisateur et/ou l'identification de dispositif portable (210) ;
l'acquisition des informations d'authentification de liaison descendante et l'émission vers le terminal d'une instruction de détection qui transporte les informations d'authentification de liaison descendante et l'identification de dispositif portable de l'utilisateur (220) ;
la réception d'un accusé de réception de détection, renvoyé par le terminal, qui transporte des informations d'authentification de liaison montante, les informations d'authentification de liaison montante étant générées, par un dispositif portable désigné dans l'instruction de détection, selon une clé d'authentification de dispositif et les informations d'authentification de liaison descendante, et la clé d'authentification de dispositif étant identique ou correspondant à la clé d'authentification de serveur (230) ;
la mise en correspondance des informations d'authentification de liaison descendante avec les informations d'authentification de liaison montante à l'aide de la clé d'authentification de serveur de l'utilisateur, pour déterminer un résultat d'authentification d'utilisateur pour l'utilisateur, dans lequel l'utilisateur passe l'authentification si la mise en correspondance réussit (240) ;
l'envoi au terminal du résultat d'authentification d'utilisateur ; et
la réalisation du service demandé pour l'utilisateur sur le terminal si l'utilisateur passe l'authentification.

2. Procédé selon la revendication 1, dans lequel le serveur stocke en outre une clé publique d'utilisateur de l'utilisateur, la clé publique d'utilisateur correspond à l'identification d'utilisateur, l'identification de dispositif portable et la clé d'authentification de serveur de l'utilisateur, et la clé publique d'utilisateur et la clé privée d'utilisateur stockées dans le terminal sont une paire de clés ;
l'accusé de réception de détection renvoyé par le terminal est signé à l'aide de la clé privée d'utilisateur stockée dans le terminal ; et
le procédé comprend en outre : la réalisation d'une vérification de signature sur l'accusé de réception de détection du terminal selon la clé publique d'utilisateur de l'utilisateur, dans lequel l'authentification sur l'utilisateur échoue si la vérification échoue.

3. Procédé selon la revendication 1, dans lequel le serveur stocke en outre une identification de terminal, et l'identification de terminal correspond à l'identification d'utilisateur, à l'identification de dispositif portable et à la clé d'authentification de serveur de l'utilisateur ;
la demande d'authentification comprend en outre : une identification de terminal destinée à envoyer la demande d'authentification ; et
le procédé comprend en outre : si l'identification de terminal correspondant à l'identification d'utilisateur ou à l'identification de dispositif portable dans la demande d'authentification est différente de l'identification de terminal destinée à l'envoi de la demande d'authentification, l'authentification de l'utilisateur échoue.

4. Procédé selon l'une quelconque des revendications 1 à 3, dans lequel le serveur stocke en outre une clé privée de serveur, et la clé privée de serveur et une clé publique de terminal stockées dans le terminal sont une paire de clés ; et
le procédé comprend en outre : la signature de l'instruction de détection à l'aide de la clé privée de serveur.

5. Procédé selon l'une quelconque des revendications 1 à 3, dans lequel l'instruction de détection et l'accusé de réception de détection sont transmis par le biais d'un canal crypté entre le serveur et le terminal.

6. Procédé selon l'une quelconque des revendications 1 à 3, dans lequel le serveur est un serveur de paiement et la demande d'authentification est une demande de paiement ; et
le procédé comprend en outre : la fourniture d'un service de paiement à un utilisateur passant l'authentification.

7. Procédé selon l'une quelconque des revendications 1 à 6, comprenant en outre l'enregistrement du dispositif portable, comprenant :
la réception d'une demande d'enregistrement de dispositif portable envoyée par le terminal selon une opération de l'utilisateur, la demande d'enregistrement transportant une identification d'utilisateur et une identification de dispositif portable de l'utilisateur (410) ;
l'acquisition d'une clé d'authentification de serveur de l'utilisateur et une clé d'authentification de dispositif, et l'émission au terminal d'une instruction d'écriture qui transporte la clé d'authentification de dispositif et l'identification de dispositif portable de l'utilisateur (420) ; et
la réception d'un accusé de réception d'écriture renvoyé par le terminal, et si l'accusé de réception d'écriture indique que la clé d'authentification de dispositif a été stockée avec succès dans un dispositif portable désigné dans l'instruction d'écriture, le stockage d'une relation correspondante entre l'identification d'utilisateur, l'identification de dispositif portable et la clé d'authentification de serveur de l'utilisateur (430).

8. Procédé selon la revendication 7, dans lequel le stockage d'une relation correspondante entre l'identification d'utilisateur, l'identification de dispositif portable et la clé d'authentification de serveur de l'utilisateur comprend :
l'émission d'une demande de confirmation de mot de passe au terminal ; et
la réception, à partir du terminal, d'un accusé de réception de confirmation de mot de passe qui transporte un mot de passe d'utilisateur, et si le mot de passe d'utilisateur est correct, le stockage de la relation correspondante entre l'identification d'utilisateur, l'identification de dispositif portable et la clé d'authentification de serveur de l'utilisateur.

9. Procédé selon la revendication 7 ou 8, dans lequel l'accusé de réception d'écriture renvoyé par le terminal comprend en outre une clé publique d'utilisateur générée par le terminal ; et
le stockage d'une relation correspondante entre l'identification d'utilisateur, l'identification de dispositif portable et la clé d'authentification de serveur de l'utilisateur comprend en outre : le stockage d'une relation correspondante entre l'identification d'utilisateur, l'identification de dispositif portable, la clé d'authentification de serveur et la clé publique de l'utilisateur.

10. Procédé selon la revendication 7 ou 8, dans lequel le serveur stocke en outre une clé privée de serveur et une clé publique de serveur ; la clé privée de serveur et une clé publique de terminal stockées dans le terminal sont une paire de clés ; et la clé publique de serveur et une clé privée de terminal stockées dans le terminal sont une paire de clés ;
le procédé comprend en outre : la signature de l'instruction d'écriture à l'aide de la clé privée de serveur ; et
le procédé comprend en outre : la réalisation d'une vérification de signature sur l'accusé de réception d'écriture du terminal à l'aide de la clé publique de serveur et le rejet de la demande d'enregistrement si la vérification échoue.

11. Procédé d'authentification d'un utilisateur, réalisé sur un terminal connecté à un dispositif portable de l'utilisateur, le procédé comprenant :
l'envoi d'une demande de l'utilisateur sur le terminal pour un service, à partir d'un serveur, nécessitant une authentification d'identité ;
l'envoi d'une demande d'authentification au serveur selon une opération de l'utilisateur, la demande d'authentification transportant une identification d'utilisateur et/ou une identification de dispositif portable du dispositif portable de l'utilisateur (310) ;
la réception d'une instruction de détection du serveur, l'instruction de détection transportant des informations d'authentification de liaison descendante et l'identification de dispositif portable (320) ;
l'envoi des informations d'authentification de liaison descendante au dispositif portable désigné dans l'instruction de détection, et la réception des informations d'authentification de liaison montante renvoyées par le dispositif portable ; les informations d'authentification de liaison montante étant générées par le dispositif portable selon une clé d'authentification de dispositif stockée et les informations d'authentification de liaison descendante, et la clé d'authentification de dispositif étant identique ou correspondant à une clé d'authentification de serveur stockée dans le serveur (330) ;
l'envoi au serveur d'un accusé de réception de détection qui transporte les informations d'authentification de liaison montante (340) ;
l'authentification de l'utilisateur, y compris la réception d'un résultat d'authentification d'utilisateur déterminé par le serveur selon les informations d'authentification de liaison montante, les informations d'authentification de liaison descendante et la clé d'authentification de serveur (350) ; et
l'exécution des opérations du service demandé sur le terminal pour l'utilisateur si l'utilisateur passe l'authentification.

12. Procédé selon la revendication 11, dans lequel le terminal stocke une clé privée d'utilisateur de l'utilisateur, et la clé privée d'utilisateur et une clé publique d'utilisateur stockée dans le serveur sont une paire de clés ; et
le procédé comprend en outre : la signature de l'accusé de réception de détection à l'aide de la clé privée de l'utilisateur.

13. Procédé selon la revendication 11 ou 12, dans lequel le terminal stocke une clé publique de terminal, et la clé publique de terminal et une clé privée de serveur stockée dans le serveur sont une paire de clés ;
l'instruction de détection émise par le serveur est signée à l'aide de la clé privée de serveur ; et
le procédé comprend en outre : la réalisation d'une vérification de signature sur l'instruction de détection du serveur selon la clé publique de terminal, et le rejet de l'instruction de détection si la vérification échoue.

14. Procédé selon la revendication 11 ou 12, dans lequel la demande d'authentification est une demande de paiement, et le terminal effectue une opération de paiement de l'utilisateur après que le résultat d'authentification d'utilisateur est que l'authentification a réussi.

15. Procédé selon l'une quelconque des revendications 11 à 14, comprenant en outre l'enregistrement du dispositif portable, comprenant :
l'envoi d'une demande d'enregistrement du dispositif portable à un serveur selon une opération d'un utilisateur, la demande d'enregistrement transportant une identification d'utilisateur et une identification de dispositif portable de l'utilisateur (510) ;
la réception d'une instruction d'écriture du serveur, l'instruction d'écriture transportant une clé d'authentification de dispositif et l'identification de dispositif portable de l'utilisateur (520) ;
l'exécution d'une opération d'écriture de la clé d'authentification de dispositif sur un dispositif portable désigné dans l'instruction d'écriture (530) ; et
l'envoi d'un accusé de réception d'écriture au serveur, l'accusé de réception d'écriture transportant un message indiquant si la clé d'authentification de dispositif a été écrite avec succès (540).

16. Procédé selon la revendication 15, dans lequel le procédé comprend en outre : après l'envoi de l'accusé de réception d'écriture au serveur, la réception d'une demande de confirmation de mot de passe du serveur, et le renvoi au serveur d'un accusé de réception de confirmation de mot de passe transportant un mot de passe d'utilisateur saisi par l'utilisateur.

17. Procédé selon la revendication 15 ou 16, dans lequel le procédé comprend en outre : après que l'opération d'écriture de la clé d'authentification de dispositif a réussi, la génération d'une clé privée d'utilisateur et une clé publique d'utilisateur de l'utilisateur, et le stockage de la clé privée d'utilisateur ; et
l'accusé de réception d'écriture transporte en outre la clé publique d'utilisateur de l'utilisateur.

18. Procédé selon la revendication 15 ou 16, dans lequel le terminal stocke une clé publique de terminal et une clé privée de terminal ; la clé publique de terminal et une clé privée de serveur stockées dans le serveur sont une paire de clés ; et la clé privée de terminal et une clé publique de serveur stockées dans le serveur sont une paire de clés ;
le procédé comprend en outre : l'exécution d'une vérification de signature sur l'instruction d'écriture du serveur à l'aide de la clé publique du terminal, et le rejet de l'instruction d'écriture si la vérification échoue ; et
le procédé comprend en outre : la signature de l'accusé de réception d'écriture à l'aide dela clé privée de terminal.

19. Appareil d'authentification d'un utilisateur et d'enregistrement d'un dispositif portable pour un serveur, dans lequel le serveur stocke une relation correspondante entre une identification d'utilisateur, une identification de dispositif portable et une clé d'authentification de serveur de l'utilisateur, l'appareil comprenant plusieurs modules configurés pour réaliser l'une quelconque des revendications 1 à 10.

20. Appareil d'authentification d'un utilisateur et d'enregistrement d'un dispositif portable pour un terminal connecté à un dispositif portable de l'utilisateur, dans lequel l'appareil comprend plusieurs modules configurés pour réaliser l'une quelconque des revendications 11 à 18.
